# EUROPÄISCHE PATENTSCHRIFT

(11) **EP 4 051 575 B1**
(45) Veröffentlichungstag und Bekanntmachung des Hinweises auf die Patenterteilung: **04.03.2026**
(21) Anmeldenummer: 20807264.5
(22) Anmeldetag: 30.10.2020
(51) Int. Cl.: B63C 9/00, G08B 21/08

(54) **SYSTEM ZUM ERFASSEN EINES MENSCH-ÜBER-BORD-EREIGNISSES**
SYSTEM FOR DETECTING A MAN-OVERBOARD EVENT
SYSTÈME DE DÉTECTION D'UN ÉVÉNEMENT HOMME À LA MER

(30) Priorität: 01.11.2019 DE 102019129559
(43) Veröffentlichungstag der Anmeldung: 07.09.2022
(73) Patentinhaber: Anschütz GmbH, 24106 Kiel (DE)
(72) Erfinder: DELFS, Michael, 24106 Kiel (DE); KAHL, Hinrich, 24106 Kiel (DE); LINDNER, Werner, 24106 Kiel (DE); STEUERNAGEL, Bernhard, 24106 Kiel (DE); WELZEL, Oliver, 24106 Kiel (DE); WERNER, Markus, 24106 Kiel (DE); WESSEL, Michael, 24106 Kiel (DE)
(74) Vertreter: Lobemeier, Martin Landolf
(86) Internationale Anmeldenummer: PCT/DE2020/100926
(87) Internationale Veröffentlichungsnummer: WO 2021/083463

(56) Entgegenhaltungen:
- DE-A1- 102018 127 664
- GB-A- 2 493 390
- US-A1- 2012 229 282
- US-A1- 2018 043 977

## Beschreibung

Die Erfindung betrifft ein System zum Erfassen eines Mensch-über-Bord-Ereignisses mit einer Mehrzahl von wenigstens einen optischen Sensor mit einem vorbestimmten Erfassungsbereich aufweisenden Recheneinheiten und einem mit der Mehrzahl von Recheneinheiten verbundenen Alarmierungsserver.

Die Fortbewegung mittels Wasserfahrzeugen auf der Wasseroberfläche bringt es mit sich, dass Menschen über die Bordwand vom Wasserfahrzeug ins Wasser fallen. Dieses als Mensch-über-Bord oder kurz MOB bezeichnete Ereignis erfordert das sofortige Einleiten von Rettungsmaßnahmen der über Bord gegangenen Person, wobei ein derartiges Mensch-über-Bord-Manöver bei Eintritt eines Mensch-über-Bord-Ereignisses für alle Betroffenen oberste Priorität besitzt. Ein System zum Erfassen eines Mensch-über-Bord-Ereignisses ist beispielsweise aus US2018043977A1 bekannt.

Schnelles und überlegtes Handeln sind für die über Bord gegangene Person überlebenswichtig, da einerseits für die Schiffsmannschaft die Gefahr, den Punkt des Fallens des Opfers aus den Augen zu verlieren, andererseits für die über Bord gegangene Person die akute Lebensgefahr sehr groß sind.

So gehen beispielsweise auf Kreuzfahrtschiffen weltweit jährlich etwa 40 bis 50 Menschen über Bord, von denen statistisch gesehen nur etwas mehr als 10 % aufgefunden werden und das Ereignis überleben. Hierbei ist insbesondere problematisch, dass im statistischen Durchschnitt von dem Augenblick an, in dem ein Mensch über Bord geht, bis zur Bestätigung, dass tatsächlich ein Mensch-über-Bord-Ereignis vorliegt, etwa 15 Minuten vergehen und sich das Schiff von der Unglücksstelle - auch aufgrund seiner Geschwindigkeit und einer recht langen Stoppstrecke von etwa einer Seemeile - im Mittel sieben bis acht Seemeilen entfernt hat, bevor ein Mensch-über-Bord-Manöver zur Rettung der verunglückten Person eingeleitet werden kann.

Je nach Fahrgeschwindigkeit und Lage der Person zum Schiff werden in der Großschifffahrt als Single Turn, Williamson-Turn oder Schamow-Turn bekannte Mensch-über-Bord-Manöver gefahren, die ein Aufstoppen des Schiffs in geringem Abstand und in Luv zur im Wasser treibenden Person ermöglichen, die sich zur Rettung möglichst ungefähr mittschiffs querab zum Schiff befinden soll.

Bekannte Systeme zum Erfassen, Verifizieren und Registrieren eines Mensch-über-Bord-Manöver erfordernden Vorfalls bestehen dabei beispielsweise aus dem eingangs genannten System mit einer Mehrzahl von an einem Schiff angeordneten, jeweils einen Bereich der Schiffsbordwand erfassenden Kameras oder sonstiger Sensoren die mit einem zur (Video-) Analyse und Alarmierung eingerichteten Server verbunden sind. Alle Kameras des Systems übertragen dabei jeweils einen Video- oder Sensordatenstrom an einen (Video-) Analyseserver, der die von den Sensoren und/oder Kameras gelieferten Bilddaten auswertet und bei Detektion einer über Bord gehenden Person in einem Bildstrom ein entsprechendes Alarmsignal an ein mit dem Server verbundenes, sich auf der Schiffsbrücke befindliches Terminal übermittelt, von wo aus die zur Rettung der über Bord gegangenen Person erforderlichen Maßnahmen eingeleitet werden können.

Nachteilig an diesen bekannten Systemen ist die Stör- und Ausfallanfälligkeit des Systems: zum einen muss der Videoanalyse-Server permanent eine Vielzahl von den Kameras (oder Sensoren) empfangenen (Video-) Daten verarbeiten, sodass die Verarbeitung dieser Daten nicht nur eine große Rechenkapazität, sondern auch eine gewisse Zeit erfordert; zum anderen wird das Netzwerk (Ethernet) dabei kontinuierlich mit einer sehr hohen Datenlast durch die Videos der Kameras belastet. Dabei sind auch Laufzeitunterschiede der von den einzelnen Kameras gesendeten Daten zu berücksichtigen, um im Verhältnis zur Bewegung des Schiffs eine exakte Positionsbestimmung der über Bord gegangenen Person zu ermöglichen, wodurch die Geschwindigkeit, mit der ein Mensch-über-Bord-Ereignis identifiziert werden kann, weiter herabgesetzt wird. Schließlich wird das System auch vollständig wirkungslos, wenn der Videoanalyse-Server überlastet oder defekt ist.

Aufgabe der vorliegenden Erfindung ist es daher, ein System zum Erfassen eines Mensch-über-Bord-Ereignisses zu schaffen, das ein schnelles Erfassen eines Mensch-über-Bord-Ereignisses ermöglicht und zugleich möglichst ausfallsicher sowie wenig störanfällig ist.

Diese Aufgabe wird erfindungsgemäß durch das System mit den Merkmalen von Anspruch 1 gelöst. Die Unteransprüche geben vorteilhafte Ausgestaltungen der Erfindung wieder.

Grundgedanke der Erfindung ist es, statt eines Systems mit zentralisierter Auswertung mit einer Mehrzahl von peripher angeordneten Videokameras und einem mit diesen verbundenen zentral angeordneten Videoanalyse- und Alarmierungsserver einen dezentralen Systemaufbau zu schaffen, bei dem jede einzelne Kamera, die eine Mehrzahl von Sensoren aufweisen kann, mit jeweils eigener Intelligenz ausgestattet ist, die das Feststellen von Ereignissen / Events auf der einen Seite erlaubt, und aus der Kombination dieser Events dann auf der anderen Seite das Feststellen eines Mensch-über-Bord-Ereignisses für den von der jeweiligen Kamera erfassten Bereich erlaubt. Dadurch, dass die von den Kameras erfassten Daten nicht mehr zentral von einem einzigen Server nacheinander verarbeitet werden, sondern parallel und zeitgleich zueinander, kann für die Rettung über Bord gegangener Personen wertvolle Zeit gespart werden.

Insbesondere werden in den Kameras verschiedene optische Sensoren, vornehmlich Kameras, aber auch Lidar-Sensoren, genutzt, wobei die Prozessierung der Sensordaten dezentral erfolgt. Die prozessierten Daten werden dann bevorzugt auf einen Daten- und Eventserver transferiert und nachfolgend an das ergänzende Navigations-System zur Alarmverifzierung, gegebenenfalls zur Darstellung, zur Datenaufzeichnung, zum nautischen Support und zu einer möglichen Aktivierung von optionalen Aktuatoren übermittelt.

Die optische Sensoren aufweisenden ersten Recheneinheiten weisen insbesondere jeweils mindestens eine Infrarot-Lichtquelle sowie optische Sensoren im menschlichen Sehbereich, Infrarotbereich und im Thermalbereich auf. Ein besonders einfacher Aufbau kann erreicht werden, wenn eine Infrarot-Lichtquelle und ein Licht im menschlichen Sehbereich reflektiertes Licht erfassender optischer Sensor, insbesondere eine Kamera verwendet wird, sodass auf eine Thermalkamera verzichtet werden kann.

Die ersten Recheneinheiten sind mit einer zweiten Recheneinheit verbunden, wobei jedoch jede erste Recheneinheit unabhängig von den anderen zur Auswertung der vom wenigstens einen optischen Sensor der jeweiligen ersten Recheneinheit sensierten Daten eingerichtet ist, die dann zur Erzeugung von Ereignismeldungen, (im folgenden Events genannt) durch die erste Recheneinheit genutzt werden. Diese Events werden dann in der von den ersten Recheneinheiten räumlich getrennten zweiten Recheneinheit zur Bestimmung genutzt, ob ein Mensch-über-Bord-Ereignis eingetreten ist sowie zur Alarmierung.

Die ersten Recheneinheiten sind mit der zweiten Recheneinheit bevorzugt mittels einer IT-Infrastruktur, insbesondere über Ethernet mit oder ohne PoE Versorgung, die nach (z.B. nach dem IEEE 802.3bt) Standard ausgelegt ist, verbunden. Alternativ können auch Funkverbindungen genutzt werden. Die zweite Event-verarbeitende und darstellende Recheneinheit ist allein zur Ausgabe eines Alarms (inklusive der dazugehörigen Video-Sequenzen) zur Ausführung eines Mensch-über-Bord-Manövers eingerichtet. Zusätzlich kann die zweite Recheneinheit überprüfen, ob die einzelnen ersten Recheneinheiten aktiv, insbesondere funktionsfähig sind - eine Analyse der Sensordaten hinsichtlich eines Mensch-über-Bord-Ereignisses und Verifizieren bzw. Registrieren eines Events übernimmt die zweite Recheneinheit hingegen nicht.

Ausgehend davon, dass ein durchschnittliches Kreuzfahrtschiff regelmäßig 12 Überwachungspunkte benötigt, würden bei zwei Kameras pro Überwachungspunkt gemäß dem Stand der Technik insgesamt 24 Videoströme an einen zentralen Videoanalyseserver gesendet und von diesem verarbeitet werden müssen. Ein durchschnittlicher, gepackter Videodatenstrom in HD-Auflösung beansprucht dabei ca. 7 Mbit/s pro Kamera, sodass eine IT-Infrastruktur mit 168 Mbit/s bereitgestellt werden müsste.

Insgesamt kann die Netzwerkstruktur weniger aufwändig ausgestaltet werden, da lediglich das Auftreten von Events bzw. Events als solche gemeldet, nicht aber parallel alle Videodatenströme aller ersten Recheneinheiten übermittelt werden müssen.

Zugleich erfolgt auf der Brücke des Schiffs das Alarmieren eines Mensch-über-Bord-Ereignisses direkt auf der zweiten Recheneinheit. Das Bild für die Alarmierung eines Mensch-über-Bord-Ereignisses erscheint dann direkt auf dem Bildschirm des Navigationssystems und fordert den fahrenden Offizier zu einer Beurteilung auf. Neben dem Alarm erscheint das zugeordnete Video des Überwachungspunktes, der das Auftreten des Mensch-über-Bord-Ereignisses angezeigt hat. Anhand des bereitgestellten Videos beurteilt der fahrende Offizier, ob es sich um ein Mensch-über-Bord-Ereignis handelt und leitet entsprechend ein Mensch-über-Bord-Manöver ein. Es erfolgt eine Registrierung mit Alarm-Managementsystem der Brücke und im Voyage-Data-Recorder. Alternativ kann der Alarmierungsserver so eingerichtet sein, dass dieser aktiv in die längs- und querdynamische Steuerung des Wasserfahrzeugs zur Ausführung eines Mensch-über-Bord-Manövers eingreift.

Hierfür ist eine Anbindung des Mensch-über-Bord-Systems an das Navigationssystem erforderlich.

Erfindungsgemäß wird also ein System zum Erfassen eines Mensch-über-Bord-Ereignisses vorgeschlagen, mit einer Mehrzahl von wenigstens einen optischen Sensor mit einem vorbestimmten Erfassungsbereich aufweisenden ersten Recheneinheiten und einem mit der Mehrzahl von ersten Recheneinheiten verbundenen zweiten Recheneinheit, wobei jede erste Recheneinheit unabhängig voneinander zur Auswertung der vom wenigstens einen optischen Sensor der jeweiligen ersten Recheneinheit sensierten Daten eingerichtet ist, die dann zur Erzeugung von Events durch die erste Recheneinheit genutzt werden. Diese Events werden dann in der zweiten Recheneinheit zur Bestimmung genutzt, ob ein Mensch-über-Bord-Ereignis eingetreten ist, wobei die zweite Recheneinheit zur Ausgabe eines Alarms und/oder eines Steuerbefehls zur Ausführung eines Mensch-über-Bord-Manövers eingerichtet ist.

Die zweite Recheneinheit führt entsprechend keine Videoanalyse von Bilddaten durch, ist aber bevorzugt dazu eingerichtet, die Funktionstüchtigkeit der mit diesem verbundenen ersten Recheneinheiten abzufragen. Dieses kann in vorbestimmten Abständen erfolgen, die beispielsweise regelmäßig ausgelegt sind, wobei so ein Ausfall oder Defekt einer ersten Recheneinheit schnell erkannt werden kann, ohne dass das übrige System funktionslos wird.

Darüber hinaus ist die zweite Recheneinheit bevorzugt aus einem Eventserver, der zum Empfangen und Speichern von den ersten Recheneinheiten an den Events, und einem mit dem Eventserver verbundenen Alarmierungsrechner, der zur Verarbeitung von dem Eventserver empfangenen Events, aus deren Kombination dann ein Mensch-über-Bord Ereignis gefiltert wird und zur Ausgabe eines Alarms und/oder eines Steuerbefehls zur Ausführung eines Mensch-über-Bord-Manövers eingerichtet ist, gebildet.

Insbesondere ist die zweite Recheneinheit, insbesondere der Alarmierungsrechner bevorzugt eingerichtet, einen Alarm und/oder einen Steuerbefehl nur dann auszugeben, wenn weitere Parameter erfüllt sind. So mag die zweite Recheneinheit, insbesondere der Alarmierungsrechner beispielsweise eine Plausibilitätsüberprüfung der der zweiten Recheneinheit übermittelten, insbesondere auf dem Eventserver gespeicherten Daten durchführen und einen Alarm und/oder einen Steuerbefehl nur dann ausgeben, wenn die Daten den der Überprüfung oder Auswertung zugrunde liegenden Kriterien genügen.

Bevorzugt weist wenigstens eine erste Recheneinheit eine Mehrzahl von optischen Sensoren auf, die einen sich überlappenden Erfassungsbereich besitzen. Diese Ausgestaltung erlaubt entsprechend die Auswertung eines insbesondere nahezu identischen Erfassungsbereichs mit unterschiedlichen Mitteln, sodass die Auswertung von Daten unterschiedlicher optischer Sensoren die Genauigkeit bei der Bestimmung eines Mensch-über-Bord-Ereignisses erhöht.

Weiter ist vorgesehen, dass wenigstens eine erste Recheneinheit eine Infrarot-Lichtquelle mit einem Infrarotstrahler in den Erfassungsbereich des wenigstens einen Sensors einstrahlenden Abstrahlbereich aufweist. Die Infrarot-Lichtquelle strahlt Infrarotlicht bis maximal 830 nm ab und leuchtet den Erfassungsbereich der Sensoren, der Tageslichtkamera aus.

Gemäß der Erfindung handelt es sich bei dem wenigstens einen optischen Sensor um eine Tageslichtkamera. Die Tageslichtkamera zeichnet bevorzugt Videobilder im sichtbaren Spektrum, sowie Infrarotlicht bis zu einer Wellenlänge von maximal 830 nm auf. Die Thermalkamera hingegen weist bevorzugt ein Erfassungsspektrum von 8 µm bis 14 µm auf.

Insbesondere ist aber bevorzugt vorgesehen, dass jede erste Recheneinheit eine Mehrzahl von optischen Sensoren aufweist, die ausgewählt sind aus der Gruppe von Sensoren bestehend aus einer Tageslichtkamera und einer Thermalkamera. Gemäß der Erfindung ist vorgesehen, dass jede erste Recheneinheit eine Infrarot-Lichtquelle sowie eine Tageslichtkamera und möglicherweise eine Thermalkamera aufweist.

Zusätzlich ist speziell vorgesehen, dass jede erste Recheneinheit ein optisches und/oder akustisches Alarmmittel aufweist, das bei Vorliegen eines Mensch-über-Bord-Ereignisses zur Ausgabe eines Alarmsignals eingerichtet ist. Dieses kann unabhängig von der Anbindung an die zweite Recheneinheit aktiviert sein, sodass unmittelbar vor Ort auf eine Mensch-über-Bord-Ereignis aufmerksam gemacht werden kann.

Schließlich ist erfindungsgemäß auch ein Wasserfahrzeug mit dem zuvor beschriebenen System vorgesehen, an dessen Bordwand die Mehrzahl von ersten Recheneinheiten angeordnet sind. Insbesondere sind die ersten Recheneinheiten so eingerichtet und zueinander ausgerichtet, dass die optischen Sensoren von wenigstens zwei ersten Recheneinheiten einen sich überlappenden Erfassungsbereich aufweisen.

Ein besonders schnell agierendes System wird bevorzugt dadurch geschaffen, dass das System zur Ausführung eines Mensch-über-Bord-Manövers auf die längs- und querdynamische Steuerung des Wasserfahrzeugs wirkend eingerichtet ist. Dabei erfolgt die Ausführung des Mensch-über-Bord-Manövers gemäß dem aktuellen Kurs, der Position des Schiffs zum Zeitpunkt des Mensch-über-Bord-Ereignisses unter Berücksichtigung der relativen Position des Ereignisses zum Schiff sowie der Wind- und Strömungsverhältnisse. Insbesondere ist dafür vorgesehen, dass eine Übergabe des Alarms mit Zeitstempel vom Mensch-über-Bord-Systems zum Navigationssystem erfolgt, bei der auch weitere Daten übergeben werden, insbesondere die den Alarm betreffende Schiffsseite, die relative Schiffslänge, die Fallhöhe und/oder das Bild bzw. Video des Mensch-über-Bord-Events, und gemeinsam als Mensch-über-Bord-Eintrag in das elektronische Schiffs-Logbuch eingetragen werden. Dieses wird speziell verbunden mit der geografischen Position, Wetter- Wind und Strömungsdaten aus dem Navigationssystem. Ebenfalls dazu gehört eine Rückübertragung von Daten vom Navigationssystem zum Mensch-über-Bord-System.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine schematische Seitenansicht eines mit dem erfindungsgemäßen System ausgestatteten Kreuzfahrtschiffs; und
- Fig. 2: eine schematische Ansicht eines besonders bevorzugt ausgestalteten Systems nach der Erfindung.

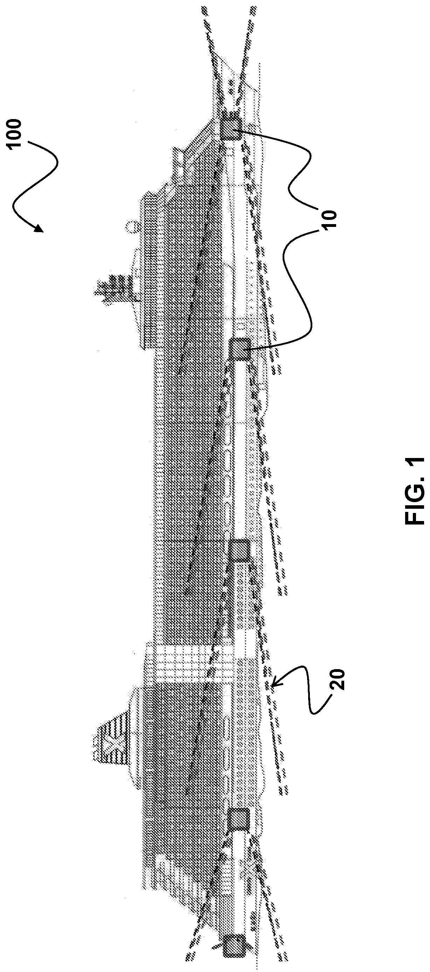

Fig. 1 zeigt beispielhaft ein Kreuzfahrtschiff 100 mit einer Mehrzahl von an diesem angeordneten ersten Recheneinheiten 10, deren optische Sensoren jeweils einen nahezu identischen Erfassungsbereich 20 aufweisen, wobei sich auch der Erfassungsbereich 20 der optischen Sensoren unterschiedlicher erster Recheneinheiten teilweise überlappt. Der Erfassungsbereich 20 jeder ersten Recheneinheit 10 ist für die in jeder ersten Recheneinheit 10 verbaute Tageslichtkamera und Thermalkamera durch die gestrichelten Linien dargestellt.

Insbesondere weisen die ersten Recheneinheiten 10 eine Infrarot-Lichtquelle sowie eine Tageslichtkamera und eine Thermalkamera auf. Die ersten Recheneinheiten 10 sind mit einer (nicht dargestellten) zweiten Recheneinheit verbunden, wobei jedoch jede erste Recheneinheit 10 unabhängig voneinander zur Auswertung der vom wenigstens einen Sensor der jeweiligen ersten Recheneinheit 10 sensierten Daten eingerichtet ist, die dann zur Erzeugung von Events durch die erste Recheneinheit genutzt werden. Diese Events werden in der zweiten Recheneinheit zur Bestimmung genutzt, ob ein Mensch-über-Bord-Ereignis eingetreten ist. Die ersten Recheneinheiten 10 sind mit der zweiten Recheneinheit mittels einer IT-Infrastruktur, insbesondere über Ethernet mit PoE, die speziell nach nach dem IEEE 802.3bt Standard ausgelegt ist, verbunden. Die zweite Recheneinheit ist neben der Bestimmung eines Mann-über-Bord Ereignisses aus der Kombination der vom Eventserver gemeldeten Events, zur Ausgabe eines Alarms und/oder eines Steuerbefehls zur Ausführung eines Mensch-über-Bord-Manövers eingerichtet. Zusätzlich kann die zweite Recheneinheit überprüfen, ob die einzelnen Recheneinheiten 10 aktiv, insbesondere funktionsfähig sind - eine Analyse der Sensordaten hinsichtlich eines Mensch-über-Bord-Ereignisses übernimmt der Eventserver hingegen nicht.

Die zweite Recheneinheit weist ein (nicht dargestelltes) optisches und akustisches Alarmmittel auf, das bei Vorliegen eines Mensch-über-Bord-Ereignisses zur Ausgabe eines Alarmsignals eingerichtet ist.

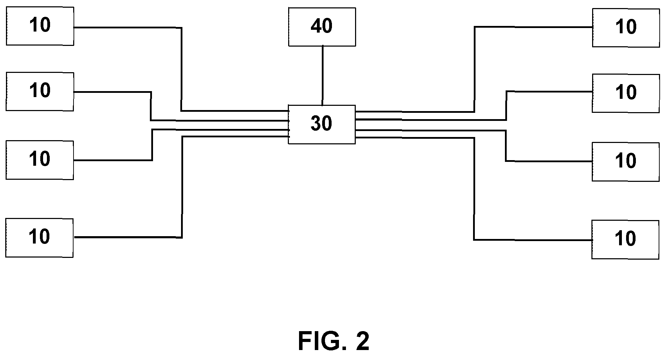

Fig. 2 zeigt einen schematischen Aufbau eines besonders bevorzugt ausgestalteten Systems nach der Erfindung. Insbesondere zeigt Fig. 2 ein System zum Erfassen eines Mensch-über-Bord-Ereignisses mit einer Mehrzahl von wenigstens einen Sensor mit einem vorbestimmten Erfassungsbereich aufweisenden ersten Recheneinheiten 10, die jeweils mit einem Eventserver 30 verbunden sind. Jede erste Recheneinheit 10 ist unabhängig zur Auswertung der vom wenigstens einen Sensor der jeweiligen ersten Recheneinheit 10 sensierten Daten und gemeldeten Events, zur Meldung (Event) an den Eventserver 30 eingerichtet.

Der Eventserver 30 bildet mit dem mit diesem verbundenen Alarmierungsserver 40 die bevorzugte Ausgestaltung der zweiten Recheneinheit nach der Erfindung, wobei der Alarmierungsserver 40 zur Ausgabe eines Alarms und/oder bei Anbindung an das Navigationssystem eines Steuerbefehls zur Ausführung eines Mensch-über-Bord-Manövers eingerichtet ist. Diese Events werden in der zweiten Recheneinheit zur Bestimmung genutzt, ob ein Mensch-über-Bord-Ereignis eingetreten ist. Insbesondere kann der Alarmierungsserver 40 die dem Eventserver 30 übermittelten Events einer weitere Überprüfung oder Auswertung unterziehen und unter Berücksichtigung weiterer Kriterien einen Alarm und/oder einen entsprechenden Steuerbefehl ausgeben oder unterdrücken.

## Patentansprüche

1. System zum Erfassen eines Mensch-über-Bord-Ereignisses mit
- einer Mehrzahl von wenigstens einer das sichtbare Spektrum und Infrarotlicht bis zu einer Wellenlänge von maximal 830 nm erfassenden Tageslichtkamera mit einem vorbestimmten Erfassungsbereich (20) aufweisenden ersten Recheneinheiten (10) mit einer in den Erfassungsbereich (20) der Tageslichtkamera einstrahlenden Infrarot-Lichtquelle und
- einem mit der Mehrzahl von Recheneinheiten (10) verbundenen zweiten Recheneinheit,
wobei jede erste Recheneinheit (10) unabhängig voneinander
- zur Auswertung der von der wenigstens einen Tageslichtkamera der jeweiligen ersten Recheneinheit (10) sensierten Daten,
- zur Bestimmung, ob ein Mensch-über-Bord-Ereignis vorliegt, anhand dieser Daten und
- zur Meldung bei Vorliegen eines Mensch-über-Bord-Ereignisses (Event) an die zweite Recheneinheit
eingerichtet ist,
wobei die zweite Recheneinheit zur Ausgabe eines Alarms und/oder eines Steuerbefehls zur Ausführung eines Mensch-über-Bord-Manövers eingerichtet ist.

2. System nach Anspruch 1, **dadurch gekennzeichnet, dass** die zweite Recheneinheit einen Eventserver (30), der zum Empfangen und Speichern von von den ersten Recheneinheiten (10) an den Eventserver (30) übermittelten Mensch-über-Bord-Ereignissen (Events) eingerichtet ist, und einen mit dem Eventserver (30) verbundenen Alarmierungsrechner (40) aufweist, der zur Verarbeitung von von dem Eventserver empfangenen Events und zur Ausgabe eines Alarms und/oder eines Steuerbefehls zur Ausführung eines Mensch-über-Bord-Manövers eingerichtet ist.

3. System nach einem der vorhergehenden Ansprüche, **gekennzeichnet durch** ein optisches und/oder akustisches Alarmmittel, das bei Vorliegen eines Mensch-über-Bord-Ereignisses zur Ausgabe eines Alarmsignals eingerichtet ist.

4. Wasserfahrzeug (100) mit einem System nach einem der vorhergehenden Ansprüche.

5. Wasserfahrzeug (100) mit einem System nach Anspruch 4, **dadurch gekennzeichnet, dass** die Sensoren von wenigstens zwei ersten Recheneinheiten (10) einen sich überlappenden Erfassungsbereich (20) aufweisen.

6. Wasserfahrzeug (100) nach einem der Ansprüche 4 und 5, **dadurch gekennzeichnet, dass** das System zur Ausführung eines Mensch-über-Bord-Manövers auf die längs- und querdynamische Steuerung des Wasserfahrzeugs wirkend eingerichtet ist.

## Claims

1. System for detecting a man-overboard incident with
- a plurality of first computing units (10) having at least one daylight camera with a predetermined detection range (20) detecting the visible spectrum and infrared light up to a maximum wavelength of 830 nm, and having an infrared light source irradiating the detection range (20) of the daylight camera, and
- a second computing unit connected to the plurality of computing units (10),
wherein each first computing unit (10) independently of one another is set up for the
- evaluation of the data sensed by the at least one daylight camera of the respective first computing unit (10) from light emitted by the infrared light source and reflected in the human visual range,
- determination based on this data whether a man-overboard incident has occurred and
- report to the second computing unit if a man-overboard incident (event) has occurred,
wherein the second computing unit is configured to output an alarm and/or a control command for executing a man-overboard manoeuvre.

2. System according to claim 1, **characterized in that** the second computing unit has an event server (30) that is set up to receive and store man-overboard incidents (events) transmitted from the first computing units (10) to the event server (30), and an alarm computer (40) connected to the event server (30), which is designed to process events received from the event server and to output an alarm and/or a control command for executing a man-overboard manoeuvre.

3. System according to one of the preceding claims, **characterized by** an optical and/or acoustic alarm means which is designed to emit an alarm signal in the event of a man-overboard incident.

4. Watercraft (100) with a system according to one of the preceding claims.

5. Watercraft (100) with a system according to claim 4, **characterized in that** the sensors of at least two first computing units (10) have an overlapping detection range (20).

6. Watercraft (100) according to any one of claims 4 and 5, **characterized in that** the system is designed to act on the longitudinal and transverse dynamic control of the watercraft for performing a man-overboard manoeuvre.

## Revendications

1. Système permettant la détection d'un évènement d'homme à la mer comportant
- une pluralité de premières unités de calcul (10) présentant au moins une caméra à lumière du jour détectant le spectre visible et la lumière infrarouge jusqu'à une longueur d'onde de 830 nm au maximum et comportant une zone de détection (20) prédéterminée, la pluralité de premières unités de calcul comportant une source de lumière infrarouge rayonnant dans la zone de détection (20) de la caméra à lumière du jour, et
- une seconde unité de calcul connectée à la pluralité d'unités de calcul (10),
dans lequel chaque première unité de calcul (10) est indépendamment configurée pour
- évaluer des données détectées par l'au moins une caméra à lumière du jour de la première unité de calcul (10) respective,
- déterminer si un évènement d'homme à la mer existe à l'aide desdites données, et
- signaler à la seconde unité de calcul l'existence d'un évènement d'homme à la mer (évènement),
dans lequel la seconde unité de calcul est configurée pour émettre une alarme et/ou un ordre de commande pour l'exécution d'une manœuvre d'homme à la mer.

2. Système selon la revendication 1, **caractérisé en ce que** la seconde unité de calcul présente un serveur d'évènement (30) configuré pour recevoir et stocker des évènements d'homme à la mer (évènements) transmis par les premières unités de calcul (10) au serveur d'évènement (30), et un calculateur d'alarme (40) connecté au serveur d'évènement (30) et configuré pour traiter des évènements reçus du serveur d'évènement et pour émettre une alarme et/ou un ordre de commande pour l'exécution d'une manœuvre d'homme à la mer.

3. Système selon l'une des revendications précédentes, **caractérisé par** un moyen d'alarme optique et/ou acoustique qui, lorsqu'un évènement d'homme à la mer existe, est configuré pour émettre un signal d'alarme.

4. Navire (100) comportant une système selon l'une des revendications précédentes.

5. Navire (100) comportant un système selon la revendication 4,
**caractérisé en ce que** les capteurs d'au moins deux premières unités de calcul (10) présentent une zone de détection (20) qui se chevauche.

6. Navire (100) selon l'une des revendications 4 et 5, **caractérisé en ce que** le système est configuré pour exécuter une manœuvre d'homme à la mer en agissant sur la commande dynamique longitudinale et transversale du navire.
